# NOUVEAU FASCICULE DE BREVET EUROPEEN

(11) **EP 0 623 387 B2**
(45) Date de publication et mention de la décision concernant l'opposition: **16.08.2001**
(45) Mention de la délivrance du brevet: 02.09.1998
(21) Numéro de dépôt: 94400890.3
(22) Date de dépôt: 25.04.1994
(51) Int. Cl.: B01J 23/64, B01J 23/62, B01J 37/02, C10G 45/52, C10G 45/00

(54) **Procédé d'hydrogénation catalytique**
Katalytisches Hydrierverfahren
Catalytic hydrogenation process

(30) Priorité: 06.05.1993 FR 9305554
(43) Date de publication de la demande: 09.11.1994
(73) Titulaire: INSTITUT FRANCAIS DU PETROLE, 92502 Rueil-Malmaison (FR)
(72) Inventeur: Le Peltier, Fabienne, F-92500 Rueil Malmaison (FR); Didillon, Blaise, F-92500 Rueil Malmaison (FR); Sarrazin, Patrick, F-92500 Rueil Malmaison (FR); Boitiaux, Jean-Paul, F-78300 Poissy (FR)
(74) Mandataire: Lewald, Dietrich, Dipl.-Ing.

(56) Documents cités:
- DE-A- 3 402 321
- FR-A- 2 210 443
- FR-A- 2 539 647
- FR-A- 2 545 380
- FR-A- 2 594 711
- US-A- 3 531 543
- US-A- 3 677 969
- US-A- 4 888 104
- US-A- 5 118 884

## Description

La présente invention concerne un procédé d'hydrogénation d'hydrocarbures insaturés (acétylèniques, éthylèniques ou aromatiques) avec un catalyseur renfermant au moins un support, au moins un métal du groupe VIII, au moins un métal additionnel (dénommé métal M) qui est choisi parmi le germanium, l'étain, le plomb, le titane, le fer, le molybdène, le tungstène ou le rhénium et éventuellement au moins un halogène tel que le chlore ou le fluor et éventuellement un élément de la famille des sulfurides tel que le soufre.

Les brevets et publications démontrant que l'addition de promoteurs à un métal de base améliore la qualité des catalyseurs sont fort nombreux. Ces éléments sont ajoutés sous différentes formes telles que sels ou composés organométalliques. On obtient généralement des catalyseurs plus actifs ou plus sélectifs, parfois plus stables qu'avec le métal de base.

On connaît ainsi de longue date l'intérêt des catalyseurs contenant, un métal noble de la famille du platine et au moins un métal additionnel choisi dans le groupe de constitué par l'étain, le germanium et le plomb déposé sur un support (US 4504593).

La façon dont ces modificateurs sont apportés n'est pas indifférente car il est nécessaire que les divers éléments - du catalyseur soient intimement associés pour qu'un effet notable soit obtenu.

La présente invention concerne la modification d'un catalyseur appelé ci-après "précatalyseur" par ajout dans des conditions bien contrôlées des éléments modificateurs directement dans le réacteur où l'utilisation du catalyseur doit être faite. Cette façon de faire présente de nombreux avantages pratiques mais on a pu constater, de manière surprenante, qu'un tel mode de fabrication permettait l'obtention de catalyseurs bien plus performants que ceux obtenus par préparation hors site.

Selon la présente invention, le procédé d'hydrogénation d'hydrocarbures acétylèniques, éthylèniques ou aromatiques, opère à une température comprise entre 25 et 500°C, sous une pression absolue comprise entre 0,1 et 10 MPa, avec une vitesse spatiale comprise entre 0,5 et 50 volumes de charge liquide par heure et par volume de catalyseur.

Plus précisément, les conditions applicables
- aux procédés d'hydrogénation des hydrocarbures acétyléniques sont les conditions connues de l'homme de l'art et plus particulièrement une température moyenne comprise entre 10 et 150°C, une pression comprise entre 0,1 et 5 MPa et de préférence entre 1,5 et 2,5 MPa et une vitesse spatiale comprise entre 0,5 et 50 volumes de charge liquide par heure et par volume de catalyseur,
- aux procédés d'hydrogénation des hydrocarbures éthylèniques et notamment des diènes contenues dans les charges sont les conditions généralement utilisées pour ce type de transformations et plus particulièrement une température moyenne comprise entre 10 et 100 °C, une pression comprise entre 0,1 et 6 MPa et de préférence entre 1,5 et 2,5 MPa et une vitesse spatiale comprise entre 0,5 et 6 volumes de charge liquide par heure et par volume de catalyseur,
- aux procédés d'hydrogénation des hydrocarbures aromatiques dans les conditions généralement utilisées pour ce type de transformations et plus particulièrement à une température moyenne comprise entre 50 et 400 °C, une pression comprise entre 0,1 et 10 MPa et une vitesse spatiale comprise entre 0,5 et 50 volumes de charge liquide par heure et par volume de catalyseur.

Le support du catalyseur selon l'invention comporte au moins un oxyde réfractaire qui est généralement choisi parmi les oxydes des métaux des groupes III ou IV de la classification périodique des éléments tels que par exemple les oxydes d'aluminium, de silicium, de titane, pris seuls ou en mélange entre eux ou en mélange avec d'autres oxydes d'éléments de la classification périodique. On peut aussi utiliser le charbon.

Pour les réactions d'hydrogénation d'hydrocarbures acétyléniques, éthylèniques ou aromatiques, le support préféré est l'alumine, dont la surface spécifique est avantageusement comprise entre 5 et 400 m² par gramme, de préférence entre 50 et 250 m² par gramme.

Le précatalyseur renferme au moins un support, au moins un métal du groupe VIII et éventuellement un halogène ou un composé halogéné.
Le métal du GVIII est de préférence choisi dans le groupe constitué par le platine, le palladium et le nickel. Ce précatalyseur ne renferme pas le métal additionnel M. Il est préparé par toute technique connue de l'homme du métier.

Le précatalyseur est, par exemple, préparé à partir d'un support préformé selon les méthodes classiques consistant à imprégner le support au moyen de solutions de composés des éléments que l'on désire introduire. On utilise soit une solution commune des métaux présents dans le précatalyseur soit des solutions distinctes dans un ordre quelconque. Quand on utilise plusieurs solutions, on peut procéder à des séchages et/ou des calcinations intermédiaires. Par exemple l'introduction du métal du groupe VIII peut être réalisée par imprégnation du support par une solution aqueuse d'un composé du métal sélectionné, cette solution pouvant contenir d'autres éléments tels que par exemple le chlore ou le fluor. Après l'introduction du métal du groupe VIII. le produit obtenu est calciné après un éventuel séchage, la calcination est effectuée de préférence à une température comprise entre 150 et 500 °C.

Dans le brevet US 4504593, l'introduction du ou des métaux M additionnels a été décrite.

Ainsi, après éventuellement une étape de calcination, on procède à l'introduction du ou des métaux additionnels dans le précatalyseur. Eventuellement avant d'introduire ledit métal M on procède à une réduction à l'hydrogène, par exemple entre 20 et 600 °C. Cette réduction peut consister par exemple en une montée en température, sous courant d'hydrogène jusqu'à la température désirée comprise entre 100 et 400 °C, suivie d'un palier sous hydrogène pendant 1 à 8 heures à cette température.

Le métal additionnel M est introduit sous la forme d'au moins un composé organométallique ou alcoolate choisi dans le groupe formé par les complexes, en particulier les complexes carbonyles, polycetoniques des métaux M, et les hydrocarbylmétaux du métal M tels que les alkyles, les cycloalkyles, les aryles, les alkylaryles métaux et les arylalkyles métaux.

L'introduction du métal M est avantageusement effectuée à l'aide d'une solution dans un solvant organique du composé alcoolate ou organométallique dudit métal M. On peut également employer des composés organo-halogénés des métaux M. Comme composés de métaux M on citera en particulier, le tétrabutyiétain, le tétraméthylétain, le tétrapropylgermanium, le diphénylétain, le tétraéthyl plomb, l'acétylacetonate d'indium, l'acétylacétonate de thallium, l'éthanolate de tallium, le triéthygallium, l'isopropylate de titane, le fer dodécacarbonyl, le molybdèné carbonyl, le tungstène carbonyl, l'hexacarbonyl de fer, et le dichlorodicyclopentadiényle de titane, le rhénium carbonyl.

Le solvant d'imprégnation est choisi dans le groupe constitué par les solvants organiques oxygénés contenant de 2 à 8 atomes de carbone par molécule, et les hydrocarbures paraffiniques, naphténiques ou aromatiques contenant essentiellement de 6 à 15 atomes de carbone par molécule et les composés organiques halogénés contenant de 1 à 15 atomes de carbone par molécule. On peut citer l'éthanol, le tétrahydrofuranne, le n-heptane, le méthyl cyclohexane, le toluène et le chloroforme. On peut utiliser ces solvants pris seuls ou en mélange entre eux. Cette méthode d'introduction du métal M a déjà été décrite dans le brevet US-A-4504593.

On a maintenant découvert, qu'une introduction du métal additionnel M in situ produisait des résultats inattendus. Le procédé objet de l'invention est décrit dans la revendication 1. La méthode d'introduction est caractérisée en ce que ledit métal additionnel M est introduit par mise en contact sous atmosphère réductrice (par exemple hydrogène) d'au moins un composé organique du métal additionnel M (pur ou dilué éventuellement dans au moins une solution hydrocarbonée), avec le précatalyseur chargé dans le réacteur où seront injectées la ou les charges réactionnelles, par exemple les hydrocarbures qui subiront la transformation d'hydrogénation, en présence du catalyseur ainsi préparé ou avec le précatalyseur chargé dans un préréacteur directement relié audit réacteur. Le précatalyseur est, dans la présente invention un catalyseur renfermant au moins un support, au moins un métal du groupe VIII de la classification périodique des éléments, éventuellement un halogène ou un composé halcgéné. Ce précatalyseur ne renferme pas ledit métal additionnel M.

L'addition du métal additionnel M est réalisée in-situ en phase liquide ou en phase gazeuse c'est à dire dans le réacteur industriel (zone de réaction) ou dans un préréacteur industriel (prézone de réaction) directement relié au dit réacteur et où le précatalyseur, précurseur du catalyseur fini est chargé. Cette opération de fixation du métal additionnel M peut être réalisée entre 20 et 500 °C.

La préparation du précatalyseur, précurseur du catalyseur fini, se fait selon toute technique connue de l'homme du métier.

En vue de procéder à l'introduction du métal M dans le précatalyseur, on commence par charger le précatalyseur dans le réacteur industriel ou dans le préréacteur industriel. Avant de procéder à ce chargement, ou dans le réacteur industriel ou dans le préréacteur industriel, le précatalyseur est éventuellement séché et est soumis à une calcination sous atmosphère oxydante entre 350 et 600 °C. Selon l'invention, le précatalyseur est ensuite soumis à un traitement d'activation sous atmosphère réductrice (hydrogène).La solution préférée est un traitement d'activation sous hydrogène par exemple entre 20 et 600 °C. Cette réduction peut consister par exemple en une montée lente de la température sous courant d'hydrogène jusqu'à la température maximale de réduction, comprise par exemple entre 100 et 400 °C suivie d'un palier sous hydrogène pendant 1 à 8 heures à cette température.

Après avoir ajusté la température à la valeur désirée, comprise entre 20 et 500 °C, de préférence sous débit d'hydrogène, on procède ensuite à l'introduction du métal M.

Avant mise en contact avec la charge à traiter, le solvant d'imprégnation est éliminé si nécessaire et l'on procède à un traitement thermique sous débit gazeux, d'hydrogène de préférence, à haute température, comprise entre 300 et 600 °C, pendant plusieurs heures. Après réduction le catalyseur peut éventuellement être sulfuré par traitement thermique sous hydrogène contenant 50 à 400 ppm de soufre sous forme de thipohène, de diméthyldisulfure ou tout composé connu de l'homme du métier pour réaliser une sulfuration d'un catalyseur métallique.

Le catalyseur selon l'invention renferme de préférence en poids par rapport au support (a) environ 0,01 % à 2 % et de préférence 0,1 à 0,5% d'au moins un métal du groupe VIII, (b) environ 0,005 à 1%, et avantageusement de 0,005 à 0,5% poids d'au moins un métal choisi dans le groupe constitué par le germanium, l'étain, le plomb, le titane, le fer, le tungstène, le molybdène et le rhénium et (c) éventuellement 0,1 % à 15 % poids et de manière préférée 0,9 à 2,8 % d'un halogène tel que le chlore et/ou le fluor et (d) éventuellement 0,002 à 0,2 % d'un élément tel que le soufre.

Une méthode préférée de préparation de catalyseurs selon l'invention consiste à opérer comme suit :
(a) on imprègne un support, à l'aide d'une solution aqueuse contenant au moins un métal du groupe VIII et pouvant contenir au moins un halogène tel que le chlore. On obtient ainsi une masse catalytique appelée précédemment "précatalyseur" ;
(b) on sèche la masse catalytique (ou précatalyseur) obtenue ;
(c) on calcine la masse, puis conformément à l'invention ;
(d) on charge la masse catalytique obtenue dans un réacteur industriel ou dans un préréacteur industriel ;
(e) on réduit la masse catalytique calcinée chargée dans le réacteur ;
(f) on met en contact la masse catalytique réduite chargée dans le réacteur avec le composé organique du métal additionnel M pur ou solubilisé dans un solvant ;
(g) si nécessaire on élimine le solvant ;
(h) on réduit la masse catalytique contenant le platine ou le métal noble ou le métal du groupe VIII et le métal additionnel M ;
(i) le catalyseur peut éventuellement être sulfuré par traitement sous hydrogène en présence de 300 ppm de soufre sous forme de diméthyldisulfure.

On a ainsi découvert qu'en opérant en présence de catalyseurs préparés selon l'invention, ces catalyseurs possédaient une activité, et une stabilité accrues et une meilleure régénérabilité, par rapport aux catalyseurs préparés selon les techniques de l'art antérieur.

Les exemples suivants, non limitatifs, illustrent l'invention.

### EXEMPLE 1

On se propose de réduire sélectivement les composés acétylèniques d'une charge en limitant la production de composés totalement hydrogénés.

Pour ce faire, on prépare deux catalyseurs A et B renfermant 0,05 % en poids de palladium, 0,048 % en poids d'étain. Le support est une alumine de surface spécifique de 70 m² par gramme et de volume poreux de 0,60 cm³ par gramme.

### Préparation du catalyseur A (comparatif)

Le catalyseur A est préparé à partir de 100 g de support alumine. On procède à l'introduction du palladium par ajout de 60 cm³ d'une solution aqueuse de nitrate de palladium contenant en tout 0,3 g de palladium. On laisse 2 heures en contact, on sèche 1 heure à 120 °C puis on calcine pendant 2 heures à 530 °C. On réduit ensuite le catalyseur 2 heures sous un débit d'hydrogène de 80 litres par heure à 150 °C. On obtient ainsi un précatalyseur au palladium.

Ensuite 50 g du précatalyseur réduit contenant le palladium sont chargés sous azote dans un ballon réactionnel. On procède alors à l'imprégnation de l'étain en ajoutant 30 cm³ d'une solution de n-heptane contenant 0,40 g de tétrabutylétain. On laisse en contact 8 heures à la température ambiante sous un débit d'hydrogène de 85 litres par heure. Le solide obtenu est essoré puis séché à 120 °C et ensuite on réduit sous hydrogène à 150°C pendant 2 heures.

### Préparation du catalyseur B (selon l'invention)

20 ml de précatalyseur calciné au palladium sont préparés dans les mêmes conditions que celles décrites pour le catalyseur A. Le précatalyseur est ensuite chargé dans un réacteur tubulaire isotherme fonctionnant à la pression atmosphérique. Ce réacteur est équipé de pompes et de régulateurs de débits gazeux permettant de balayer de bas en haut le précatalyseur par une phase mixte liquide-gaz. Le liquide récupéré en sortie de réacteur est récupéré dans un ballon séparateur et recyclé à l'entrée du réacteur. Un système de chauffage électrique permet de maintenir la réacteur à température constante.

Le précatalyseur est réduit 2 heures dans le réacteur sous 20 litres par heure d'hydrogène à 150 °C. La température est alors diminuée à la température ambiante tout en conservant le débit d'hydrogène. On fait alors circuler une solution de n-heptane contenant 0,08 g de tétrabutylétain. La circulation du solvant est maintenue pendant 8 heures à la température ambiante toujours sous débit d'hydrogène. Le solvant est alors éliminé par soutirage et l'on procède à une réduction du catalyseur sous un débit d'hydrogène de 20 litres par heure pendant 2 heures à 150 °C. Ce catalyseur appelé catalyseur B est directement utilisable pour la réaction catalytique envisagée.

### EXEMPLE 2

Les propriétés catalytiques des catalyseurs A et B sont évaluées sur la charge suivante :

| | |
|---|---|
| - acétylène | 2 % poids |
| - éthylène | 88 % poids |
| - éthane ' | 10 % poids |

Le catalyseur A est chargé dans le réacteur d'hydrogénation puis réduit à 150°c sous courant d'hydrogène. Quant au catalyseur B compte tenu de son mode préparation il se trouve déjà dans le réacteur d'hydrogénation prêt à l'emploi.

Les tests sont effectués dans les conditions opératoires suivantes :

| | |
|---|---|
| - volume de catalyseur | 20 ml |
| - température | 60 °C |
| - pression | 2,4 MPa |
| - rapport molaire H₂/Acétylène | 2 |
| - volume de charge gazeuse par volume de catalyseur et par heure | 2500 |

Les résultats exprimés en % poids d'acétylène ou d'éthylène en sortie de réacteur sont rapportés dans le tableau 1.

**Tableau 1**

| Catalyseur | Acétylène (% poids) | Ethylène (% poids) |
|---|---|---|
| A | 0,01% | 81,2 |
| B | 0,006 | 81,7 |

On peut voir que le catalyseur B préparé directement dans le réacteur où l'hydrogénation est réalisée est plus actif et sélectif que le même catalyseur préparé séparément puis introduit dans le réacteur de test.

### EXEMPLE 3

On se propose de réduire sélectivement les composés dioléfiniques d'une coupe C4 de craquage catalytique en limitant la production de composés totalement hydrogénés.

Pour ce faire, on prépare deux catalyseurs C et D renfermant 0,3 % en poids de palladium, 0,25 % en poids de germanium. Le support est une alumine de surface spécifique de 70 m² par gramme et de volume poreux de 0,60 cm³ par gramme.

Le catalyseur C (comparatif) a été préparé comme le catalyseur A de l'exemple 1 si ce n'est que le tétrabutylétain a été remplacé par le tétrabutylgermanium. Le catalyseur D (selon l'invention) a été préparé comme le catalyseur B de l'exemple 1 in situ dans le réacteur d'hydrogénation, si ce n'est que l'on a remplacé le tétrabutylétain par le tétrabutylgermanium.

On teste l'activité et la sélectivité des catalyseurs C et D sur une charge de composition:

| | |
|---|---|
| - propane | 0,2 % poids |
| - propylène | 0,02 % poids |
| - isobutane | 28,7 % poids |
| - butane | 13,9 % poids |
| - butène-1 | 14,5 % poids |
| - isobutène | 17,5 % poids |
| - t-butène-2 | 13,0 % poids |
| - c-butène-2 | 10,1 % poids |
| - butadiéne | 1,12 % poids |
| - isopentane | 0,05 % poids |
| - pentane | 0,91 % poids |

Le catalyseur C est chargé dans le réacteur d'hydrogénation puis réduit à 150°c sous courant d'hydrogène. Quant au catalyseur D compte tenu de son mode préparation il se trouve déjà dans le réacteur d'hydrogénation prêt à l'emploi.

Les conditions de test sont les suivantes :

| | |
|---|---|
| - volume de catalyseur | 20 ml |
| - température | 50 °C |
| - pression | 1,0 MPa |
| - rapport molaire H₂/butadiène | 1,8 |
| - volume de charge liquide par volume de catalyseur et par heure | 10 |

Le tableau 2 compare les performances des catalyseurs C et D. Les résultats sont exprimés en % poids en sortie de réacteur.

**Tableau 2**

| Catalyseur | C | D |
|---|---|---|
| propane | 0,2 | 0,2 |
| propylène | 0,01 | 0,01 |
| isobutane | 28,9 | 28,3 |
| butane | 14,9 | 14,6 |
| butène-1 | 10,2 | 8,605 |
| isobutène | 17,5 | 17,6 |
| t-butène-2 | 16,5 | 18,3 |
| c-butène-2 | 10,7 | 11,2 |
| butadiène | 0,02 | 0,015 |
| isopentane | 0,05 | 0,04 |
| pentane | 1,02 | 1,13 |
| conversion du butadiène (%) | 98,2 | 98,7 |
| isomérisation du butène 1 (%) | 29,6 | 40,6 |

Le catalyseur D préparé selon l'invention, présente de meilleures performances catalytiques que le catalyseur C préparés selon les techniques de l'art antérieur (conversion du butadiène et isomérisation du butène-1 plus importantes).

### EXEMPLE 4

On se propose de réduire sélectivement les composés acétylèniques d'une coupe C4 de vapocraquage.

Pour ce faire, on prépare deux catalyseurs E et F renfermant 0,3 % en poids de palladium, 0,04 % en poids de tungstène. Le support est une alumine de surface spécifique de 70 m² par gramme et de volume poreux de 0,60 cm³ par gramme.

Le catalyseur E (comparatif) a été préparé comme le catalyseur A de l'exemple 1 si ce n'est que le tétrabutylétain a été remplacé par le tungstène hexacarbonyie. Le catalyseur F (selon l'invention) a été préparé comme le catalyseur B de l'exemple in situ dans le réacteur d'hydrogénation, si ce n'est que l'on a remplacé le tétrabutylétain par le tungstène hexacarbonyle.

On teste l'activité et la sélectivité des catalyseurs E et F sur une charge de composition :

| | |
|---|---|
| - butane | 1,94 % poids |
| - butène-1 | 12,67 % poids |
| - isobutène | 19,67 % poids |
| - t-butène-2 | 5,99 % poids |
| - c-butène-2 | 11,43 % poids |
| - butadiène-1,3 | 43,32 % poids |
| - butadiène-1,2 | 2,24 % poids |
| - butyne-1 | 1,15% poids |
| - vinylacétylène | 1,59 % poids |

Le catalyseur E est chargé dans le réacteur d'hydrogénation puis réduit à 150°c sous courant d'hydrogène. Quant au catalyseur F compte tenu de son mode préparation il se trouve déjà dans le réacteur d'hydrogénation prêt à l'emploi.

Les conditions de test sont les suivantes :

| | |
|---|---|
| - volume de catalyseur | 20 ml g |
| - température | 50 °C |
| - pression - | 0,7MPa |
| - volume de charge liquide par volume de catalyseur et par heure | 7 |

Le tableau 3 compare les performances des catalyseurs E et F. Les résultats sont exprimés en % poids en sortie de réacteur.

Le catalyseur F préparé selon l'invention, présente de meilleures performances catalytiques que le catalyseur E préparé selon les techniques de l'art antérieur. En effet, il permet une meilleure conversion des composés acétyléniques sans convertir les composés dioléfiniques initialement présents.

**Tableau 3**

| Catalyseur | E | F |
|---|---|---|
| butane | 1,91 | 1,90 |
| butène-1 | 13,61 | 13,58 |
| isobutène | 19,71 | 19,89 |
| t-butène-2 | 6,71 | 6,80 |
| c-butène-2 | 11,86 | 11,78 |
| butadiène-1,3 | 43,19 | 43,25 |
| butadiène-1,2 | 2,21 | 2,22 |
| butyne-1 | 0,68 | 0,52 |
| vinylacétylène | 0,12 | 0,06 |
| conversion (%) | 70,8 | 78,8 |
| Acétylèniques Diéniques | 0,35 | 0,1 |

### EXEMPLE 5

On se propose de réduire sélectivement les composés aromatiques d'une charge contenant 50 ppm de soufre.

Pour ce faire, on prépare un catalyseur G renfermant 0,6 % en poids de platine et deux catalyseur H et I renfermant 0,6 % en poids de platine, 0,8 % en poids de germanium. Le support est une alumine de surface spécifique de 180 m² par gramme et de volume poreux de 0,60 cm³ par gramme.

### Préparation du catalyseur G (comparatif)

A 100 g de support d'alumine on ajoute 500 cm³ d'une solution aqueuse d'acide chlorhydrique. On laisse en contact trois heures et on essore. Sur le produit séché contenant du chlore (1 % poids), on procède alors à l'imprégnation du platine en ajoutant au solide 60 cm³ d'une solution d'acide hexachloroplatine. La concentration en platine de cette solution est égale à 10 g par litre. On laisse en contact 6 heures, on sèche 1 heure à 120 °C puis on calcine 2 heures à 530 °C.

### Préparation du catalyseur H (comparatif)

Le catalyseur H est préparé à partir de 100 g de support alumine. On procède à l'introduction du platine et du chlore par ajout de 60 cm³ d'une solution aqueuse d'acide hexachloroplatinique et d'acide chlorhydrique contenant en tout 0,25 g de platine et 1,5 g de chlore. On laisse 4 heures en contact, on sèche 1 heure à 120 °C puis on calcine pendant 2 heures à 530 °C. On réduit ensuite le catalyseur 2 heures sous un débit d'hydrogène de 80 litres par heure à 450 °C.

Ensuite sur 50 g du produit réduit contenant le platine (appelé précédemment précatalyseur), on procède alors à l'imprégnation du germanium dans un ballon réactionnel, en ajoutant 30 cm³ d'une solution de n-heptane contenant 1,8 g de tétrabutylgermane. On laisse en contact 8 heures à la température ambiante sous un débit d'hydrogène de 85 litres par heure. Le solide obtenu est essoré puis séché à 120 °C et ensuite calciné à 530 °C pendant 2 heures.

### Préparation du catalyseur I (selon l'invention)

40 g de précatalyseur calciné au platine sont préparés dans les mêmes conditions que celles décrites pour le catalyseur H. Le précatalyseur est ensuite chargé dans un réacteur tubulaire isotherme fonctionnant en flux descendant à la pression atmosphérique.

Le précatalyseur est ensuite réduit 2 heures dans le réacteur sous 20 litres par heure d'hydrogène à 530 °C. La température est alors diminuée à la température ambiante tout en conservant le débit d'hydrogène. On fait alors circuler une solution de n-heptane contenant 1,6 g de tétrabutylgermane. La circulation du solvant est maintenue pendant 8 heures à la température ambiante toujours sous débit d'hydrogène. Le solvant est alors éliminé et l'on procède à une réduction du catalyseur sous un débit d'hydrogène de 20 litres par heure pendant 2 heures à 450 °C. Le catalyseur I est ensuite présulfuré. Cette étape de présulfuration consiste à faire passer sur le catalyseur réduit une charge contenant 250 ppm de soufre à 250 °C sous 1 MPa d'hydrogène, le débit de charge de présulfuration étant maintenu 1 heure à une vitesse horaire de 2 volume de charge liquide par volume de catalyseur. Ce catalyseur appelé catalyseur I est directement utilisable pour la réaction catalytique envisagée.

Les catalyseurs G et H sont chargés dans le réacteur d'hydrogénation, réduit à 450 °C sous courant d'hydrogène et présulfurés dans les conditions décrites pour le catalyseur 1. Quant au catalyseur I compte tenu de son mode préparation il se trouve déjà dans le réacteur d'hydrogénation, prêt à l'emploi, Les conditions de test sont les suivantes:

| | |
|---|---|
| - masse de catalyseur | 40 g |
| - température | 280°C |
| - pression | 4,5 MPa |
| - volume de charge liquide par volume de catalyseur et par heure | 1 |

La charge traitée contient 20 % poids de toluène et 50 ppm de soufre dans du méthylcyclohexane.

Les résultats ainsi obtenus avec ces trois catalyseurs sont rapportés dans le tableau 4. Les résultats sont exrimés en % poids de toluène recouvré en sortie de réacteur après 5 heures et 20 heures de test.

**Tableau 4**

| Catalyseur | % toluène en sortie de réacteur après 5 heures de test | % toluène en sortie de réacteur après 20 heures de test |
|---|---|---|
| G | 16,4 | 19,3 |
| H | 14,2 | 16,2 |
| I | 13,3 | 13,9 |

Ces résultats montrent clairement que les catalyseurs H et I présentent une meilleure activité que le. catalyseur G pour l'hydrogénation du toluène en présence d'un composé soufré. De plus bien que les catalyseurs H et I aient été préparés à partir des mêmes précurseurs, le catalyseurs I, selon l'invention, présentent des performances supérieures à celle du catalyseur H.

## Revendications

1. Procédé d'hydrogénation sélective de charge d'hydrocarbures insaturés acétyléniques ou aromatiques ou diéniques en présence d'un catalyseur renfermant au moins un support, au moins un métal de groupe VIII choisi parmi le platine, le palladium et le nickel et au moins un métal additionnel M choisi dans le groupe formé par le germanium, l'étain, le plomb, le titane, le fer, le molybdène, le tungstène et le rhénium et le catalyseur ayant été préparé à partir d'une masse catalytique appelée précatalyseur calcinée, chargée dans un réacteur industriel ou dans un préréacteur industriel et activée par reduction dans le réacteur qui renferme au moins un support et au moins un métal du groupe VIII, dans laquelle ledit métal additionnel M a été introduit par mise au contact de ladite masse avec au moins un composé organique d'au moins un métal additionnel M, pur ou dilué, in situ, dans la zone de réaction où se produira le traitement de la charge en présence dudit catalyseur ou dans une prézone de réaction directement en contact avec la zone de réaction, ladite introduction ayant lieu sous atmosphère réductrice, et le catalyseur contenant le métal du groupe VIII et le métal additionnel M étant activé par reduction dans le réacteur.

2. Procédé selon la revendication 1 dans lequel le catalyseur est préparé selon un procédé comportant la succession des étapes suivantes:
a) dans une première étape de ladite préparation, on prépare hors site un précatalyseur renfermant au moins ledit support et au moins ledit métal du groupe VIII, le précatalyseur étant à ce stade soumis à un séchage et à une calcination,
b) on introduit le précatalyseur dans une zone de réaction où sera envoyée la charge à traiter par ledit catalyseur ou dans une pré zone de réaction directement reliée à ladite zone de réaction,
c) on soumet alors le précatalyseur à un traitement d'activation en atmosphère réductrice et,
d) dans une deuxième étape de ladite préparation, on introduit ledit métal additionnel M dans le précatalyseur. par mise en contact sous atmosphère réductrice d'au moins un composé organique du métal additionnel M.

3. Procède selon la revendication 2 dans lequel le précatalyseur est soumis à séchage et calcination avant d'être active dans la zone de réaction ou la pré-zone de réaction.

4. Procédé selon l'une des revendications précédentes, dans lequel la charge et l'hydrogène sont mis au contact du catalyseur à une température comprise entre 25 et 500 °C, une pression absolue de 0.1 à 10 MPa, avec une vitesse spatiale comprise entre 0.5 et 50 volumes de charge liquide par heure par volume de catalyseur.

5. Procédé selon l'une des revendications 1 à 3 dans lequel le support est choisi parmi les oxydes réfractaires.

6. Procédé selon l'une des revendications 1 à 5 dans lequel, le catalyseur renferme également au moins un sulfuride.

7. Procédé selon l'une des revendications 6 dans lequel le sulfuride est le soufre.

8. Procédé selon l'une des revendications 1 à 7 dans lequel le catalyseur renferme au moins un halogène choisi dans le groupe formé par le chlore et le fluor.

9. Procédé selon l'une des revendications 1 à 8 dans lequel le composé organique du métal additionnel M est introduit en phase liquide ou en phase gazeuse.

10. Procédé selon l'une des revendications 1 à 9 dans lequel le composé organique du métal additionnel M est introduit sur le catalyseur dans au moins un solvant d'imprégnation lequel est une solution hydrocarbonée.

11. Procédé selon l'une des revendications 1 à 10 dans lequel l'activation du précatalyseur est réalisée en atmosphère réductrice, en présence d'hydrogène entre 20 et 600 °C.

12. Procédé selon l'une des revendications 10 et 11 dans lequel, à l'issue de la préparation du catalyseur, on procède (avant de mettre la charge à traiter au contact du catalyseur) à l'élimination du solvant d'imprégnation du métal additionnel M, puis à un traitement thermique.

13. Procédé selon la revendication 12 dans lequel ledit traitement thermique est effectué sous débit d'hydrogène, à une température comprise entre 300 et 600 °C.

14. Procédé selon l'une des revendications 9 à 13 dans lequel le métal additionnel M est introduit dans le pré catalyseur sous la forme d'au moins un composé organométallique ou alcoolate.

15. Procédé selon la revendication 14 dans lequel ledit composé organométallique ou alcoolate est choisi dans le groupe formé par les complexes carbonyfes ou polycétoniques du métal M et les hydrocarbymétaux du métal M tels que les alkyles, cycloalkyles, aryles, alkylaryles et arylalkyles.

16. Procédé selon l'une des revendications 9 à 15 dans lequel ledit composé organique de métal M est choisi dans le groupe constitué par l'hexacarbonyle de fer, l'isopropylate de titane, le dichlorodicyclopentadiényle de titane, le tétrabutylétain, le tétraméthylétain. le tétrapropylgermanium, le diphénylétain et le tétraéthyl plomb.

17. Procédé selon l'une des revendications 9 à 16 dans lequel ledit solvant d'imprégnation dudit métal M est choisi dans le groupe constitué par les solvants organiques oxygénés comportant de 2 à 8 atomes de carbone par molécule, les hydrocarbures paraffiniques, naphténiques et aromatiques contenant 6 à 15 atomes de carbone par molécule et les composés organiques halogénés contenant 1 à 15 atomes de carbone par molécule.

18. Procédé selon la revendication 17 dans lequel le solvant d'imprégnation est choisi dans le groupe constitué par l'éthanol, le tetrahydrofuranne. le n-heptane. le méthylcyclohexane. le toluène et le chloroforme.

## Claims

1. A process of selective hydrogenation of a charge of unsaturated acetylenic or aromatic or dienic hydrocarbons in the presence of a catalyst containing at least one substrate at least one metal of group VIII selected from Platinum, Palladium and Nickel and at least one additional metal M selected from the group formed by Germanium, Tin, Lead, Titanium, Iron, Molybdenum, Tungsten and Rhenium and the catalyst being prepared from a calcined catalytic mass called precatalyst loaded into an industrial reactor or industrial pre-reactor and activated by way of reduction within the reactor, mass containing at least one substrate and at least one metal of group VIII into which mass the additional metal M has been introduced by way of contacting the mass with at least one organic compound of at least one additional metal M in a pure or diluted form, in-situ, in the reaction zone, where the treatment of the charge will occur in the presence of said catalyst or in a pre-reaction zone directly in contact with the reaction zone, said introduction being achieved in reducing atmosphere and the catalyst containing the group VIII metal and the additional metal M being activated by way of reduction within the reactor

2. A process according to claim 1. wherein the catalyst is prepared according to a process comprising the sequence of the following steps:
(a) in a first step of said preparation, a precatalyst is prepared off site containing at least said substrate and at least said metal of group VIII, the precatalyst being at this stage subjected to a drying, and to a calcination,
(b) the precatalyst is introduced into a reaction zone where the charge to be treated will be sent by said catalyst or into a prereaction zone directly connected to said reaction zone,
(c) the precatafyst is then subjected to a treatment of activation in reducing atmosphere and,
(d) in a second step of said preparation, said additional metal M is introduced into the precatalyst, by contact under reducing atmosphere of at least one organic compound of additional metal M.

3. A process according to claim 2, wherein the precatalyst is subjected to a drying and calcination before being activated in the reaction zone or the prereactor zone.

4. A process according to one of the preceding claims, wherein the charge and the hydrogen are put in contact with the catalyst at a temperature between 25 and 500°C, an absolute pressure of 0.1 to 10 MPa, with a space velocity between 0.5 and 50 volumes of liquid charge per hour per volume of catalyst.

5. A process according to one of claims 1 to 3, wherein the substrate is selected from the refractory oxides.

6. A process according to one of claims 1 to 5, wherein the catalyst also contains at least one oxygen-sulfur family element.

7. A process according to one of claims 6. wherein the oxygen-sulfur family element is sulfur.

8. A process according to one of claims 1 to 7, wherein the catalyst contains at least one halogen selected from the group formed by chlorine and fluorine.

9. A process according to one of claims 1 to 8, wherein the organic compound of additional metal M is introduced in liquid phase or in gaseous phase.

10. A process according to one of claims 1 to 9, wherein the organic compound of additional metal M is introduced in the catalyst in at least one impregnation solvent which is a hydrocarbon solution.

11. A process according to one of claims 1 to 10, wherein the activation of the precatalyst is achieved in reducing atmosphere, in the presence of hydrogen between 20 and 600°C.

12. A process according to one of claims 10 and 11, wherein at the end of the preparation of the catalyst (before putting the charge to be treated in contact with the catalyst), the elimination of the impregnation solvent of additional metal is performed, then a heat treatment is performed.

13. A process according to claim 12, wherein said heat treatment is performed under flow of hydrogen, at a temperature between 300 and 600°C.

14. A process according to one of claims 9 to 13, wherein additional metal M is introduced in the precatalyst in the form of at least one organometallic or alcoholate compound.

15. A process according to claim 14, wherein said organometallic or alcoholate compound is selected from the group formed by the carbonyl or polyketonic complexes of metal M and the hydrocarbyl metals of metal M such as the alkyls, cycloalkyls, aryls, alkylaryls and arylalkyls.

16. A process according to one of claims 9 to 15, wherein said organic compound of metal M is selected from the group consisting of iron hexacarbonyl, titanium isopropylate, titanium dichlorodicyclopentadienyl. tetrabutyltin, tetramethyltin, tetrapropylgermanium, diphenyltin and tetraethyllead.

17. A process according to one of claims 9 to 16, wherein said impregnation solvent of said metal M is selected from the group consisting of the oxygenated organic solvents comprising 2 to 8 carbon atoms per molecule, the paraffinic, naphthenic and aromatic hydrocarbons containing 6 to 15 carbon atoms per molecule and the halogenated organic compounds containing 1 to 15 carbon atoms per molecule.

18. A process according to claim 17, wherein the impregnation solvent is selected from the group consisting of ethanol, tetrahydrofuran, n-heptane, methyl cyclohexane, toluene and chloroform.

## Patentansprüche

1. Verfahren zur selektiven Hydrierung ungesättigter acetylenischer oder aromatischer oder dienischer Kohlenwasserstoffchargen in Anwesenheit eines Katalysators, der wenigstens einen Träger, wenigstens ein aus Platin, Palladium und Nickel gewähltes Metall der Gruppe VIII und wenigstens eine Zusatzmetall M umfasst, das gewählt ist aus der Gruppe, die durch Germanium, Zinn, Blei, Titan, Eisen, Molybdän, Wolfram und Rhenium gebildet ist, wobei der Katalysator ausgehend von einer Vorkatalysator genannten kalzinierten, in einen industriellen Reaktor oder industriellen Vorreaktor geladenen und durch Reduktion in dem Reaktor aktivierten katalytischen Masse hergestellt ist, die wenigstens einen Träger und wenigstens ein Metall der Gruppe VIII umfasst und in die das Zusatzmetall M durch Kontaktieren der Masse mit wenigstens einer organischen Verbindung wenigstens eines Zusatzmetalls M, rein oder verdünnt in situ in die Reaktionszone eingeführt wurde, wo die Behandlung der Charge in Anwesenheit dieses Katalysators abläuft oder in eine Reaktionsvorzone, die direkt in Kontakt mit der Reaktionszone steht, wobei dieses Einführen unter reduzierender Atmosphäre abläuft und wobei der das Gruppe-VIII-Metall und das Zusatzmetall M enthaltende Katalysator durch Reduktion in dem Reaktor aktiviert wird.

2. Verfahren nach Anspruch 1, bei dem der Katalysator hergestellt wird gemäß einem die nachfolgenden Schritte in Reihenfolge umfassenden Verfahrens:
a) in einer ersten Stufe dieser Herstellung stellt man ek situ einen Vorkatalysator her, der wenigstens diesen Träger und wenigstens dieses Metall der Gruppe VIII umschließt, wobei der Vorkatalysator in diesem Stadium einer Trocknung und einer Kalzinierung ausgesetzt wird,
b) man führt den Vorkatalysator in eine Reaktionszone, in die die durch diesen Katalysator zu behandelnde Charge eingeführt wird oder in eine Reaktionsvorzone, die direkt mit dieser Reaktionszone verbunden ist. ein,
c) man setzt dann den Vorkatalysator einer Aktiyierungsbehandlung in reduzierender Atmosphäre aus und
d) in einer zweiten Stufe dieser Herstellung führt man dieses Zusatzmetall M in den Vorkatalysator durch Kontaktieren unter reduzierender Atmosphäre wenigstens einer organischen Verbindung dieses Zusatzmetalls M ein.

3. Verfahren nach Anspruch 2, bei dem der Vorkatalysator der Trocknung und Kalzinierung ausgesetzt wird. bevor er in der Reaktionszone oder der Reaktionsvorzone aktiviert wird.

4. Verfahren nach einem der vorhergehenden Ansprüche, bei dem die Charge und der Wasserstoff mit dem Katalysator bei einer Temperatur zwischen 25 und 500°C. einem Absolutdruck von 0,1 bis 10 MPa, bei einer Raumgeschwindigkeit zwischen 0.5 und 50 Volumina flüssiger Charge und Stunde pro Volumen Katalysator kontaktiert werden.

5. Verfahren nach einem der Ansprüche 1 bis 3. bei dem der Träger gewählt ist aus den feuerfesten Oxiden.

6. Verfahren nach einem der Ansprüche 1 bis 5. bei dem der Katalysator auch wenigstens ein Sulfurid umfaßt.

7. Verfahren nach einem der Ansprüche 6, bei dem das Sulfurid Schwefel ist.

8. Verfahren nach einem der Ansprüche 1 bis 7, bei dem der Katalysator wenigstens ein Halogen umfaßt, das aus der durch Chlor und Fluor gebildeten Gruppe gewählt ist.

9. Verfahren nach einem der Ansprüche 1 bis 8, bei dem die organische Verbindung des Zusatzmetalls M in flüssiger Phase oder in gasförmiger Phase eingeführt wird.

10. Verfahren nach einem der Ansprüche 1 bis 9. bei dem die organische Verbindung des Zusatzmetalls M auf den Katalysator in wenigstens einem Impragnierungslösungsmittel gegeben wird. das eine kohlenwasserstoffhaltige Lösung ist.

11. Verfahren nach einem der Ansprüche 1 bis 10, bei dem die Aktivierung des Vorkatalysators in reduzierender Atmosphäre in Anwesenheit von Wasserstoff zwischen 20 und 600°C durchgeführt wird.

12. Verfahren nach einem der Ansprüche 10 und 11, bei dem bei Beendigung der Herstellung des Katalysators man (bevor die zu behandelnde Charge mit dem Katalysator kontaktiert wird) zur Eliminierung des Imprägnierungslösungsmittels des Zusatzmetalls M, dann zu einer thermischen Behandlung übergeht.

13. Verfahren nach Anspruch 12. bei dem diese thermische Behandlung durchgeführt wird unter einem Wasserstoffstrom bei einer Temperatur zwischen 300 und 600°C.

14. Verfahren nach einem der Ansprüche 9 bis 13, bei dem das Zusatzmetall M in den Vorkatalysator in Form wenigstens einer organometallischen Verbindung oder Alkoholat gegeben wird.

15. Verfahren nach Anspruch 14, bei dem die orgänometallische Verbindung oder Alkoholat gewählt ist aus der Gruppe, die gebildet wird durch die Carbonyl- oder Polyketonkomplexe des Metalls M und die Hydrocarbylmetalle des Metalls M, wie die Alkyle, Cycloalkyle, Aryle, Alkylaryle und Arylalkyle.

16. Verfahren nach einem der Ansprüche 9 bis 15, bei dem diese organische Metallverbindung M gewählt ist aus der Gruppe, die gewählt ist aus Eisenhexacarbonyl, Titanisopropylat. Titandichlordicyclopentadienyl, Zinntetrabutyl, Zinntetramethyl, Germaniumtetrapropyl, Zinndiphenyl und Bleitetraethyl.

17. Verfahren nach einem der Ansprüche 9 bis 16, bei dem dieses Imprágnierungslosungsmittel dieses Metalls M gewählt ist aus der Gruppe, die gebildet wird durch die sauerstoffhaltigen organischen Lösungsmittel, welche 2 bis 8 Kohlenstoffatome pro Molekül enthalten, die paraffinischen. naphtenischen und aromatischen Kohlenwasserstoffe, welche 6 bis 15 Kohlenstoffatome pro Molekül enthalten sowie die halogenierten organischen Verbindungen, die 1 bis 5 Atome Kohenstoff pro Molekül enthalten.

18. Verfahren nach Anspruch 17, bei dem das Imprägnierungslösungsmittel gewählt ist aus der Gruppe, die durch Ethanol. Tetrahydrofuran, n-Heptan. Methylcyclohexan, Toluol und Chloroform gewählt wird.
